# EUROPEAN PATENT SPECIFICATION

(11) **EP 1 802 225 B1**
(45) Date of publication and mention of the grant of the patent: **22.04.2009**
(21) Application number: 05805810.8
(22) Date of filing: 14.10.2005
(51) Int. Cl.: A47J 43/044

(54) **ELECTRIC MIXER FOR MODIFYING THE CONSISTENCY OF THE PHASE OF A CONFECTIONERY PRODUCT**
ELEKTRISCHER MISCHER ZUR ÄNDERUNG DER KONSISTENZ DER PHASE EINER SÜSSWARE
MIXEUR ELECTRIQUE PERMETTANT DE MODIFIER LA CONSISTANCE DE LA PHASE D'UN PRODUIT DE CONFISERIE

(30) Priority: 22.10.2004 IT MI20042016
(43) Date of publication of application: 04.07.2007
(73) Proprietor: Nemox S.p.A, 25010 San Zeno Naviglio BS (IT)
(72) Inventor: PROCURANTI, Walter, I-25086 Rezzato (BS) (IT)
(74) Representative: Susanetto, Carlo
(86) International application number: PCT/IT2005/000602
(87) International publication number: WO 2006/043298

(56) References cited:
- WO-A-00/49930
- WO-A-02/082959
- US-A- 2 110 498
- US-A- 2 222 601

## Description

### Technical field

This invention relates to an electric mixer for modifying the consistency of the phase of a confectionery product, in particular an electric mixer for professional and domestic use which is capable of effecting the rapid preparation of mousses, creams, whipped cream, ice cream and the like from prepacked quantities.

### State of the art

There are today examples of professional electrical equipment capable of preparing multiple quantities of ice-cream from packs of ingredients or mixtures of ingredients already provided and frozen in suitable metal containers.

In general these comprise an ice-cream container located in a physical support and a tool for working the ice-cream driven by a rotational/translational motor capable of abrading the surface of the frozen product, gradually varying the depth of penetration within the container. These are costly and bulky devices, which are not very easy to use.

In particular the rotational/translational movement mechanism for the tool is complex.

In addition to this the position and shape of the physical support for the container is particularly inconvenient when it is necessary to gain access to it to fit and remove the container, and also for inspection and/or cleaning. Another type of mixer is disclosed for example by US 2 110 498; said mixer is provided with an agitator element and with means to lift a container, said means serving also as splash shield for the internal parts of the mixer.

### Description of the invention

The technical task which this invention is designed to perform is therefore that of providing an electric mixer and a process for the rapid preparation of mousses, creams, whipped cream, ice-cream and the like starting with prepacked quantities, which makes it possible to overcome the technical disadvantages complained of in the known art.

In the context of this technical task one object of the invention is to provide an electric mixer for the rapid preparation of mousses, creams, whipped cream, ice cream and the like from prepacked quantities, which is of low cost and has small dimensions, is simple in operation and is easy to use.

Another object of the invention is to provide an electric mixer for the rapid preparation of mousses, creams, whipped cream, ice-cream and the like from prepacked quantities, which provides easy access to the internal components, in particular to the container and container support, to ease fitting and removal of the container, inspection and/or cleaning.

According to the invention, the technical task, as well as these and other objects, is accomplished through the provision of electric mixer for modifying the consistency of the phase of a confectionery product, said mixer comprising a container for the said product, a member closing the said container and a tool for working the said product which are in line with each other, and means capable of effecting movement of the said container comprising a first reversible movement of the said open container with respect to the said closure member between an initial open position of the said container and a final closed position of the said container, and a second reversible movement of the said closed container with respect to the said tool between an initial position in which there is minimum penetration of the said tool into the said container and a final position in which there is maximum penetration of the said tool into the said container.

This invention also relates to a process for modifying the consistency of the phase of a confectionery product through an electric mixer, said process comprising at least carrying out a first upward movement of a container of the said product with respect to the said closure member for the said container from an initial open position of the said container to a final closed position of the said container and once the said final closed position of the said container has been reached driving a tool for working the said product within the said closed container in rotation, delivering pressurised air within the said closed container to emulsify the said product, and performing a second movement of the said closed container with respect to the said tool to increase the depth of penetration of the said tool within the said container.

Other features of this invention are also defined in the subsequent claims.

### Brief description of the drawings

Other advantages and characteristics of the present invention will become clear from the following detailed description which is given with reference to the appended drawings which are provided purely by way of non-limiting example and in which:

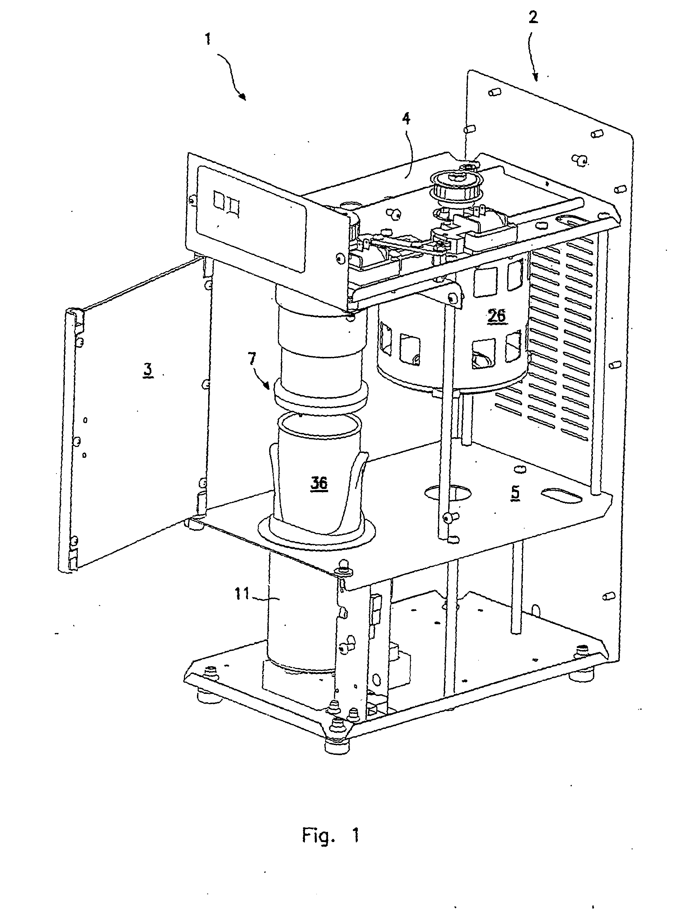

- Figure 1 shows a perspective view of a preferred embodiment of an electric mixer according to the invention in which the enclosure is partly removed, with the container in the open reference position,

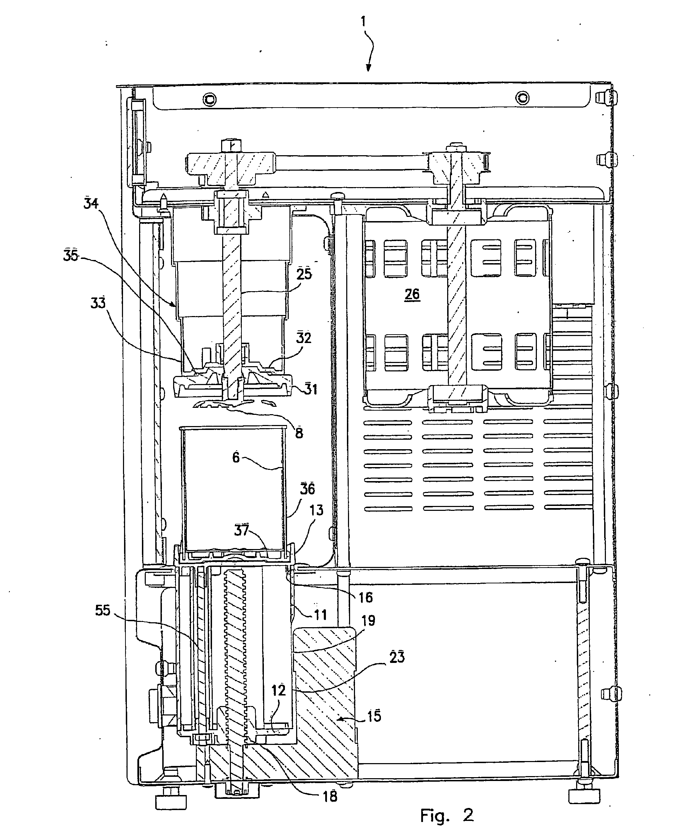

- Figure 2 provides a view in axial cross-section of the electric mixer in Figure 1, with the container in the open reference position,

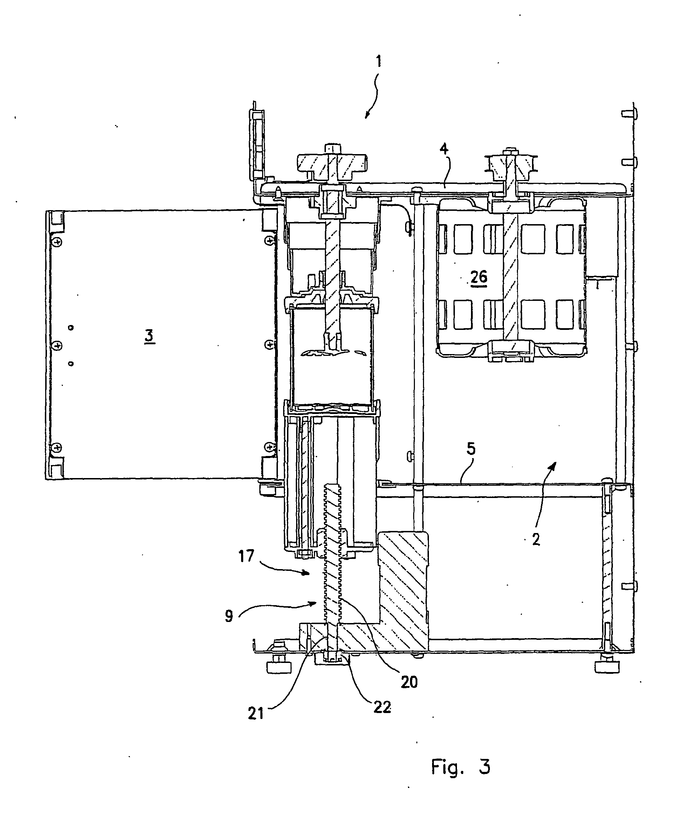

- Figure 3 shows a view in axial cross-section of the electric mixer in Figure 1, with the container closed in a position adopted during the second movement with respect to the tool,

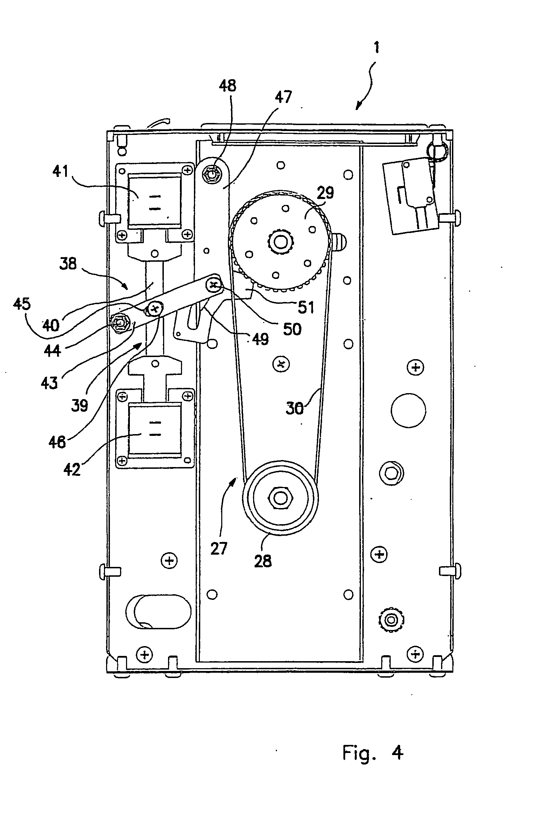

- Figure 4 shows a plan view of the electric mixer in Figure 1 from above.

### Preferred embodiment of the invention

The reference to the figures mentioned there is shown an electric mixer, indicated as a whole by reference number 1, which is capable of modifying the consistency of the phase of a confectionery product, in particular which is suitable for aiding the rapid preparation of mousses, creams, whipped cream, ice-cream and the like from prepacked quantities.

Mixer 1 comprises a tower unit comprising a box-like enclosure 2, illustrated only in part, which has at least one access door 3 to the interior of mixer 1 and one or more transverse supporting plates, in particular a plate 4 in the upper part of the space bounded by box-like enclosure 2 and a plate 5 in the bottom part of the space bounded by box-like enclosure 2.

Within box-like enclosure 2 there is a container 6 for the product being worked, in line with a closure member 7 for container 6 and a tool 8 for working the product.

In the following we will make reference purely by way of example to an electric mixer for the preparation of ice-cream from a packed and frozen quantity in which tool 8 for working the packed and frozen quantity is a mill. In particular container 6, closure member 7 and tool 8 are in line with respect to a vertical axis.

Container 6 can be moved with respect to both closure member 7 and tool 8, closure member 7 can be moved as one piece with container 6 when it is engaged therewith, while tool 8 is fixed with respect to the movement of open and closed container 6.

Movement means 9 effect movement of container 6 comprising a first reversible movement of open container 6 with respect to closure member 7 between an initial open position of container 6 and a final closed position of container 6, and a second reversible movement of closed container 6 with respect to tool 8 between an initial position of minimum penetration of tool 8 into container 6 and a final position of maximum penetration of tool 8 into container 6.

The start point for the first movement corresponds to the lowest level adopted by container 6, the end point of the first movement coincides with the start point of the second movement and corresponds to an intermediate level adopted by container 6, and the end point of the second movement corresponds to the highest level adopted by container 6.

Container 6 is borne by a hollow support 11 having a lower base 12 engaging movement means 9 from which it receives movement, and an upper base 13 supporting container 6.

Lower base 12 and upper base 13 are secured to hollow support 11 through a connecting rod 55 which runs within hollow support 11 itself.

More specifically container 6 is housed within a container holder 36 in such a way as to be joined thereto and having lower base 37 connected in a removable way, for example through a bayonet attachment system, to upper base 13 of hollow support 11.

Electric mixer 1 therefore has means to oppose relative rotation between container 6 and corresponding container holder 36 comprising matched members which can be mutually engaged between the lower base of container 6 and the lower base of container holder 36.

Preferably container 6 is of plastics while container holder 36 is of mechanically stronger material, for example steel, which is also preferable for hygiene reasons and for the greater protection offered if tool 8 should break.

Hollow support 11, which is borne by an "L-shaped" rod 15 attached to the lower base of enclosure 2 extends vertically within the space bounded between the lower base of enclosure 2 and transverse supporting plate 5, and extends through a second base 13 into the space bounded between transverse supporting plates 4 and 5 through a guide hole 16 passing through transverse supporting plate 5.

Movement means 9 comprise an endless screw 17 threaded into a threaded hub 18 of first base 12 of hollow support 11, and an intersecting member 19 which is capable of immobilising the rotation of hollow support 11 as endless screw 17 rotates.

Shank 20 of endless screw 17 is located in a hole 21 which passes from the horizontal wall of rod 15 and extends vertically within hollow body 11, while head 22 of endless screw 17 which is positioned against the outer surface of the horizontal wall of rod 15 is caused to rotate through a suitable motor (not shown) through a suitable transmission (also not shown).

The motor of the drive means is for example a variable speed direct current motor.

Intercepting member 19 is a projection in the vertical wall of rod 15 which can move in a vertical groove 23 in the side wall of hollow support 11.

Closure member 7 for container 6 is movably wedged on rotating shaft 25 supporting tool 8.

In particular shaft 25 of tool 8 is suspended vertically with respect to transverse supporting plate 4 and extends within the space bounded between plates 4 and 5 above and in line with the axis of container 6.

Shaft 25 of tool 8 is caused to rotate by a motor 26 through a movement transmission 27.

Motor 26 is also suspended on transverse supporting plate 4 and is positioned with its shaft vertical in the space bounded by plates 4 and 5, while transmission 27 is wholly positioned above supporting plate 4.

Transmission 37 has a guide pulley 28 wedged on motor shaft 26, a driven pulley 29 wedged on shaft 25 of tool 8 and a transmission belt 30 which connects drive pulley 28 to driven pulley 29.

Motor 26 for tool 8 may for example be of the alternating current constant speed type.

Closure member 7 has a resilient portion 31 facing container 6 so as to provide a seal when the container is closed, and a rigid portion 32 associated with resilient portion 31.

Rigid portion 32 is borne by a terminal member 33 of telescopic protection tube 34 supported by plate 4 and containing within it shaft 25.

Tubular protection 34 may be replaced by an equivalent member, such as a bellows or the like.

The mixture has delivery means 10 capable of delivering pressurised outside air into closed container 6.

Delivery means 10 comprise a delivery duct 35, bounded between the opposing associated surfaces of resilient and rigid portions 31 and 32, in communication with the interior of container 6 through one or more passages (not shown) made through resilient portion 31.

Air at a pressure of between approximately 1 bar and 2 bars is fed from an electrically-operated pump (not shown) connected to the mixer's control unit.

Electric mixer 1 comprises means (not shown) for detecting the start and end positions of the first and second movements of container 6.

The detection means positioned along the path of container-hollow support unit 11 are connected to the mixer's control unit and comprise a first microswitch detecting the start position of the first movement of the open container, a second microswitch detecting the end position of the first movement coinciding with the start position of the second movement of the closed container, and a third microswitch detecting the end position of the second movement.

Electric mixer 1 also has electromechanical means 38 for immobilising the rotation of tool 8, which are useful when it is necessary to remove tool 8.

Means 38 immobilising the rotation of tool 8 comprises a lever mechanism 39 mounted on the outside of transverse plate 4.

Lever mechanism 39 has a first lever 40 connected to two solenoids 41 and 42 connected to the control unit and capable of imparting a first reversible movement to first lever 40, a second lever 43 pivoted on plate 4 at 44 and having an eyelet 45 which receives a pin 46 which is integral with first lever 40 and is capable of converting movement of first lever 40 into rotation of second lever 43, and a third lever 47 pivoted on plate 4 at 48 and having an eyelet 49 which receives a pin 50 which is integral with second lever 43 and capable of converting rotation of second lever 43 into rotation of third lever 47.

Third lever 47 has an appendage 51 which when third lever 47 rotates moves from a position which is tight upon the drive pulley wedged to the shaft of tool 8 to a release position, and vice versa.

To assist tightening, the drive pulley wedged on shaft of tool 8 has peripheral shapes in which appendage 51 engages.

A switch comprising for example at least an on/off switch for the mixer, a commutating switch for the first microswitch to start a production cycle, a switch stopping the production cycle and zeroing the production cycle and a switch for rapidly effecting a production cycle are attached to the mixer's control unit.

The safety system (not shown) for the mixer comprises a detector which detects the presence of container 6 connected to the control unit to control the output of an alarm signal if container 6 is not detected when the start of a production cycle is enabled, an open holder detector connected to the control unit to control the output of an alarm signal if the holder is found to be open when the start of a production cycle is enabled, and a limiting force detector for the motor for the movement means and/or tool arising from the resistance offered to the tool by the product and based for example on detecting the motor's power consumption, which is also connected to the control unit to control reversal of the production cycle and the output of an alarm signal if the limiting force is exceeded.

The process for modifying the consistency of the phase of the confectionery product through the electric mixer according to this invention consists of performing an outward movement followed continuously by a reverse return movement of container 6.

In the starting outward movement the first movement of container 6 is performed and when container 6 reaches its final closure position tool 8 is driven in rotation to work the product, pressurised air is delivered into closed container 6 to emulsify the product, and the second movement of closed container 6 with respect to tool 8 is performed to increase the penetration depth of tool 8 within container 6.

During the return movement a first reverse return movement of the second outward movement is performed to decrease the depth to which tool 8 penetrates container 6, at the end of which the rotation of tool 8 is switched off and pressurised air is delivered into container 6, and the second return movement opposite to the first outward movement is performed to open container 6.

The second outward and return movement is carried out at the same or slower speed than that of the first outward movement in each case.

In the same way the first return movement is carried out at the same or slower speed than that of the second return movement.

When for cleaning or replacement needs it is necessary to remove tool 8, which is preferably connected to the corresponding rotation shaft through a screw connection, the means for immobilising the rotation shaft of tool 8 are activated and tool 8 is engaged with an accessory of matching shape.

Rotation of the accessory causes tool 8 to rotate and become unscrewed from the corresponding rotation shaft, the latter being immobilised with respect to rotation.

An example of the manner of operation of the mixer according to the invention is in detail substantially as follows.

After container 6 (of the disposable type) has been placed in container holder 36 and the latter has been placed on hollow support 11, the switch is activated to start the production cycle.

In response to the signal for starting up the production cycle the control unit switches the first microswitch, switching on the motor for movement means 9.

The unit of container 6 / container holder 36 / hollow support 11 rises, performing a first movement to a position in which it meets the resilient position 31 of closure member 7 which seals it.

The speed of this first outward movement is the maximum permitted. In this position the unit of container 6 / container holder 36 / hollow support 11 intercepts the second microswitch switching it in such a way that this commands start-up of both the motor of mill 8 and the electrical pump delivering air.

The unit of container 6 / container holder 36 / hollow support 11 rises again performing a second movement at a speed of 25% of that of the first outward movement.

The second outward movement continues until the group intercepts the third microswitch, switching it in such a way that the latter causes the movement of container 6 to be reversed.

The unit of container 6 / container holder 36 / hollow support 11 sinks carrying out a first return movement opposite to the second movement.

The unit again intercepts the second microswitch, again switching it in such a way that the latter causes the motor of drill 8 and the electrically-operated pump delivering air to stop.

In this situation the mill is advantageously only in movement when the container is sealed.

The units of container 6 / container holder 36 / hollow support 11 sinks again performing a second return movement opposite to the first movement.

The unit intercepts the first microswitch in such a way that this causes the motor of movement means 9 to stop.

The speed of reverse movement is approximately 50% of the maximum permitted speed.

In the reverse movement the closure member removes any parts of the product which might have remained adhering to it during the production cycle by moving along the shaft of the mill.

The electric mixer so envisaged may be subjected to numerous modifications and variants, all falling within the scope of the inventive concept; in addition to this all details may be replaced by technically equivalent members.

In practice the materials used and the dimensions may be of any kind according to requirements in the state of the art.

## Claims

1. An electric mixer for modifying the consistency of the phase of a confectionery product, said mixer comprising a container (6) for the said product, a member (7) closing the said container and a tool (8) for working the said product which are in line with each other, and movement means (9) capable of causing the said container to move in a first reversible movement of the said container (6) which is open with respect to the said closing member between an initial position in which the said container is open and a final position in which the said container is closed, and a second reversible movement of the said closed container with respect to the said tool between an initial position of minimum penetration of the said tool into the said container and a final position of maximum penetration of the said tool into the said container.

2. An electric mixer according to claim 1, **characterised in that** the said container (6), the said tool (8) and the said closing member (7) are vertically aligned.

3. An electric mixer according to any one of the preceding claims, **characterised in that** the start point for the said first movement corresponds to the lowest position adopted by the said container, the end point for the said first movement coincides with the start point of the said second movement and corresponds to an intermediate level adopted by the said container, and the end point of the said second movement corresponds to the highest level adopted by the said container.

4. An electric mixer according to any one of the preceding claims, **characterised in that** the said closing member (7) is slidably keyed onto a rotating shaft (25) supporting the said tool (8).

5. An electric mixer according to any one of the preceding claims, **characterised in that** the said closing member (7) has a resilient portion (31) facing the said container (6) which is capable of forming a seal when the said container is closed.

6. An electric mixer according to any one of the preceding claim, **characterised in that** it has delivery means (10) for delivering pressurised outside air into the said closed container (6).

7. An electric mixer according to any one of the preceding claims, **characterised in that** the said closing member (7) has a rigid portion (32) associated with the said resilient portion (31), the said delivery means comprising a delivery duct (35) bounded between the opposing associated surfaces of the said resilient and rigid portions in communication with the interior of the said container through one or more passages made through the said resilient portion.

8. An electric mixer according to any one of the receding claims, **characterised in that** the said container (6) is supported by a hollow support (11) having a lower base (12) engaging the said movement means (9) from which it receives movement, and an upper base (13) supporting the said container.

9. An electric mixer according to any one of the preceding claims, **characterised in that** the said container (6) is housed within a container holder (36) of matching shape and having its lower base (37) movably connected to the said upper base (13) of the said hollow support (11).

10. An electric mixer according to any one of the preceding claims, **characterised in that** it has means to prevent relative rotation between the said container and the said container holder comprising elements of matching shape which engage with each other.

11. An electric mixer according to any one of the preceding claims, **characterised in that** the said movement means (9) comprise a rotatable endless screw (17) which screws into a threaded hub (18) in the said lower base (12) of the said hollow support (11) and an intercepting member (19) capable of immobilising rotation of the said hollow support during rotation of the said endless screw.

12. An electric mixer according to any one of the preceding claims, **characterised in that** it comprises a tower unit having at least one transverse plate (4) on which the motor (26) driving the said tool and the said rotation shaft (25) of the said tool are suspended.

13. An electric mixer according to any one of the preceding claims, **characterised in that** the said transverse plate (4) supports a mechanism (27) on the side opposite the said motor and the said rotation shaft of the said tool to transmit motion (27) from the said motor to the said rotation shaft of the said tool.

14. An electric mixer according to any one of the preceding claims, **characterised in that** it has electromechanical means (28) while immobilising rotation of the said tool.

15. An electric mixer according to any one of the preceding claims, **characterised in that** the said means for immobilising rotation of the said tool comprise a lever mechanism (39) supported on the said transverse plate (4) opposite to the said motor and the said rotation shaft of the said tool, and operating directly on the pulley (29) for transmitting movement to the said rotation shaft of the said tool.

16. An electric mixer according to any one of the preceding claims, **characterised in that** it comprises means for detecting the start and end points of the said first and second movements of the said movement.

17. An electric mixer according to any one of the preceding claims, **characterised in that** the said detector means is connected to a control unit and comprises a first microswitch detecting the start point of the said first movement, a second microswitch detecting the end point of the said first movement coinciding with the start point of the said second movement, and a third microswitch detecting the end point of the said second movement.

18. A process for modifying the consistency of the phase of a confectionery product by means of an electric mixer (1), said process comprising at least performing a first upward movement of a container (6) for the said product with respect to a member (7) closing the said container from an initial position in which the said container is open to a final position in which the said container is sealed and on reaching the said end closed position of the said container activating in rotation a tool (8) for working the said product within the said closed container, delivering pressurised air into the said closed container to emulsify the said product, and performing a second movement of the said closed container with respect to the said tool to increase the depth of penetration of the said tool into the said container.

19. A process according to any one of the preceding claims, **characterised in that** it comprises carrying out, after the said second movement, a first return movement opposite to the said second movement to decrease the depth of penetration of the said tool in the said container, at the end of the said first return movement deactivating both rotation of the said tool and delivery of pressurised air within the said container, and performing a second return movement opposite to the said first outward movement to open the said container.

20. A process according to the preceding claim, **characterised in that** the said first and second outward and return movements are carried out one after the other without interruption.

21. A process according to the preceding claim, **characterised in that** the said second outward movement is performed at a speed which is less than or equal to that of the first outward movement.

22. A process according to the preceding claim, **characterised in that** the said first return movement is carried out at a speed which is less than or equal to that of the said second return movement.

23. A process according to any one of the preceding claims, **characterised in that** the rotation shaft of the said tool is mechanically immobilised for removal of the said tool through an accessory of a shape matching the said tool which engages with it to remove it through unscrewing.

## Patentansprüche

1. Elektrischer Mischer zum Modifizieren der Phasenkonsistenz einer Süßware, umfassend: einen Behälter (6) für die Ware, ein Organ (7) zum Verschließen des Behälters und ein Werkzeug (8) zum Bearbeiten der Ware, welche miteinander fluchten, und eine Bewegungseinrichtung (9) zum Veranlassen des Behälters, eine erste reversible Bewegung des Behälters (6), der gegenüber dem Schließorgan offen ist, zwischen einer Anfangsstellung, in der der Behälter offen ist, und einer geschlossenen Stellung, in der der Behälter verschlossen ist, auszuführen, und eine zweite reversible Bewegung des in Bezug auf das Werkzeug geschlossenen Behälters auszuführen zwischen einer Anfangsstellung bei minimaler Eindringung des Werkzeugs in den Behälter und einer Endstellung bei maximaler Eindringung des Werkzeugs in den Behälter.

2. Mischer nach Anspruch 1, **dadurch gekennzeichnet, dass** der Behälter (6), das Werkzeug (8) und das Verschlussorgan (7) vertikal ausgerichtet sind.

3. Mischer nach einem der vorhergehenden Ansprüche, **dadurch gekennzeichnet, dass** der Start der ersten Bewegung der tiefsten von dem Behälter eingenommenen Stellung entspricht, der Endpunkt der ersten Bewegung zusammenfällt mit dem Startpunkt der zweiten Bewegung und einem von dem Behälter eingenommenen Zwischenniveau entspricht, und der Endpunkt der zweiten Bewegung dem höchsten von dem Behälter eingenommenen Niveau entspricht.

4. Mischer nach einem der vorhergehenden Ansprüche, **dadurch gekennzeichnet, dass** das Verschlussorgan (7) verschieblich auf einer das Werkzeug (8) halternden Drehwelle (25) verkeilt ist.

5. Mischer nach einem der vorhergehenden Ansprüche, **dadurch gekennzeichnet, dass** das Verschlussorgan (7) einen elastischen Teil (31) aufweist, der dem Behälter (6) gegenübersteht und mit diesem bei verschlossenem Behälter eine Dichtung bilden kann.

6. Mischer nach einem der vorhergehenden Ansprüche, **dadurch gekennzeichnet, dass** er eine Zuführeinrichtung (10) zum Zuführen von Druck-Außenluft in das Innere des verschlossenen Behälters (6) aufweist.

7. Mischer nach einem der vorhergehenden Ansprüche, **dadurch gekennzeichnet, dass** das Verschlussorgan (7) einen starren Teil (32) aufweist, der dem elastischen Teil (31) zugeordnet ist, dass die Zuführeinrichtung eine Zuführleitung (35) aufweist, die zwischen einander zugehörigen Flächen des elastischen und des starren Teils eingegrenzt ist und über einen oder mehrere Kanäle, die den elastischen Teil durchsetzen, mit dem Inneren des Behälters verbunden ist.

8. Mischer nach einem der vorhergehenden Ansprüche, **dadurch gekennzeichnet, dass** der Behälter (6) gehaltert wird von einer hohlen Abstützung (11) mit einer unteren Basis (12), die mit der Bewegungseinrichtung (9) zusammenwirkt, von der sie Bewegung aufnimmt, und mit einer oberen Basis (13) zum Abstützen des Behälters.

9. Mischer nach einem der vorhergehenden Ansprüche, **dadurch gekennzeichnet, dass** der Behälter (6) innerhalb einer Behälterhalterung (36) passender Form untergebracht ist, deren untere Basis (37) beweglich mit der oberen Basis (13) der hohlen Abstützung (11) gekoppelt ist.

10. Mischer nach einem der vorhergehenden Ansprüche, **dadurch gekennzeichnet, dass** er eine Einrichtung aufweist zum Verhindern einer Relativ-Drehung zwischen dem Behälter und der Behälterhalterung, umfassend Elemente zueinander komplementärer Form, die miteinander zusammenwirken.

11. Mischer nach einem der vorhergehenden Ansprüche, **dadurch gekennzeichnet, dass** die Bewegungseinrichtung (9) eine drehbare Endlosspindel (17) aufweist, die in eine Gewindenabe (18) innerhalb der unteren Basis (12) der hohlen Abstützung (11) eingreift, außerdem ein Fangglied (19), welches die Drehung der hohlen Abstützung während der Drehung der Endlosspindel unterbinden kann.

12. Mischer nach einem der vorhergehenden Ansprüche, **dadurch gekennzeichnet, dass** er eine Turmeinheit mit mindestens einer Querplatte (4), auf der der das Werkzeug antreibende Motor (26) und die Drehwelle (25) des Werkzeugs aufgehängt sind, aufweist.

13. Mischer nach der vorhergehenden Ansprüche, **dadurch gekennzeichnet, dass** die Querplatte (4) einen Mechanismus (27) auf der dem Motor und der Drehwelle des Werkzeugs abgewandten Seite haltert, um Bewegung (27) von dem Motor auf die Drehwelle des Werkzeugs zu übertragen.

14. Mischer nach einem der vorhergehenden Ansprüche, **dadurch gekennzeichnet, dass** er elektromechanische Mittel (28) zum Stillsetzen der Drehung des Werkzeugs aufweist.

15. Mischer nach einem der vorhergehenden Ansprüche, **dadurch gekennzeichnet, dass** die Einrichtung zum Stillsetzen der Drehung des Werkzeugs aufweist: einen Hebelmechanismus (39), der auf der dem Motor und der Drehwelle des Werkzeugs abgewandten Seite der Querplatte (4) gelagert ist, und der direkt an der Riemenscheibe (29) zum Übertragen der Bewegung der Drehwelle des Werkzeugs angreift.

16. Mischer nach der einem der vorhergehenden Ansprüche, **dadurch gekennzeichnet, dass** er eine Einrichtung zum Detektieren des Anfangs- und des Endpunkts der ersten und der zweiten Bewegung des Bewegungsablaufs aufweist.

17. Mischer nach einem der vorhergehenden Ansprüche, **dadurch gekennzeichnet, dass** die Detektoreinrichtung an eine Steuereinheit angeschlossen ist und aufweist: einen ersten Mikroschalter, der den Anfangspunkt der ersten Bewegung erfasst, einen zweiten Mikroschalter zum Erfassen des Endpunkts der ersten Bewegung, übereinstimmend mit dem Anfangspunkt der zweiten Bewegung, und einem dritten Mikroschalter, der den Endpunkt der zweiten Bewegung umfasst.

18. Verfahren zum Modifizieren der Phasenkonsistenz einer Süßware mit Hilfe eines elektrischen Mischers (1), umfassend zumindest das Ausführen einer ersten Abwärtsbewegung des Behälters (6) der Ware in Bezug auf ein den Behälter verschließendes Organ (7) aus einer Anfangsstellung, in der der Behälter offen ist, in eine Endstellung, in der der Behälter abgedichtet ist, wobei beim Erreichen der geschlossenen Endstellung des Behälters die Drehung eines Werkzeugs (8) zum Bearbeiten der Ware innerhalb des geschlossenen Behälters aktiviert wird, in den geschlossenen Behälter Druckluft eingeleitet wird, um das Produkt zu emulgieren, und Ausführen einer zweiten Bewegung des geschlossenen Behälters in Bezug auf das Werkzeug, um die Eindringtiefe des Werkzeugs in den Behälter zu vergrößern.

19. Verfahren nach einem der vorhergehenden Ansprüche, **dadurch gekennzeichnet, dass** es nach der zweiten Bewegung eine erste Rückkehrbewegung entgegen der zweiten Bewegung ausführt, um die Eindringtiefe des Werkzeugs in den Behälter zu verringern, am Ende der ersten Rückkehrbewegung sowohl die Drehung des Werkzeugs als auch die Zufuhr von Druckluft in das Innere des Behälters deaktiviert wird, und eine zweite Rückkehrbewegung ausgeführt wird, die der ersten Auswärtsbewegung zum Öffnen des Behälters entgegen gesetzt ist.

20. Verfahren nach dem vorhergehenden Anspruch, **dadurch gekennzeichnet, dass** die erste und die zweite Auswärts- und Rückkehrbewegung ununterbrochen nacheinander durchgeführt werden.

21. Verfahren nach dem vorhergehenden Anspruch, **dadurch gekennzeichnet, dass** die zweite Auswärtsbewegung mit einer Geschwindigkeit ausgeführt wird, die kleiner oder gleich ist der ersten Auswärtsbewegung.

22. Verfahren nach dem vorhergehenden Anspruch, **dadurch gekennzeichnet, dass** die erste Rückkehrbewegung mit einer Geschwindigkeit ausgeführt wird, die kleiner oder gleich ist der ersten Rückkehrbewegung.

23. Verfahren nach einem der vorhergehenden Ansprüche, **dadurch gekennzeichnet, dass** die Drehwelle des Werkzeugs zur Entfernung des Werkzeugs mechanisch stillgesetzt wird über eine Anordnung aus einer Form, die mit dem Werkzeug übereinstimmt und mit diesem zusammenwirkt, um es durch Losschrauben zu lösen.

## Revendications

1. Mixeur électrique pour modifier la consistance de la phase d'un produit de confiserie, ledit mixeur comprenant un récipient (6) pour ledit produit, un membre (7) fermant ledit récipient et un outil (8) pour travailler ledit produit qui sont alignés les uns par rapport aux autres, et un moyen de déplacement (9) capable de faire se déplacer ledit récipient selon un premier mouvement réversible dudit récipient (6) qui est ouvert par rapport audit membre de fermeture entre une position initiale dans laquelle ledit récipient est ouvert et une position finale dans laquelle ledit récipient est fermé, et un second mouvement réversible dudit récipient fermé par rapport audit outil entre une position initiale de pénétration minimale dudit outil dans ledit récipient et une position finale de pénétration maximale dudit outil dans ledit récipient.

2. Mixeur électrique selon la revendication 1, **caractérisé en ce que** ledit récipient (6), ledit outil (8) et ledit membre de fermeture (7) sont alignés verticalement.

3. Mixeur électrique selon l'une quelconque des revendications précédentes, **caractérisé en ce que** le point de démarrage pour ledit premier mouvement correspond à la position la plus basse adoptée par ledit récipient, le point d'arrêt pour ledit premier mouvement coïncide avec le point de démarrage dudit second mouvement et correspond à un niveau intermédiaire adopté par ledit récipient, et le point d'arrêt dudit second mouvement correspond au niveau le plus élevé adopté par ledit récipient.

4. Mixeur électrique selon l'une quelconque des revendications précédentes, **caractérisé en ce que** ledit membre de fermeture (7) est monté coulissant sur un arbre de rotation (25) supportant ledit outil (8).

5. Mixeur électrique selon l'une quelconque des revendications précédentes, **caractérisé en ce que** ledit membre de fermeture (7) a une portion élastique (31) faisant face audit récipient (6) qui est capable de former un joint d'étanchéité lorsque ledit récipient est fermé.

6. Mixeur électrique selon l'une quelconque des revendications précédentes, **caractérisé en ce qu'**il a un moyen de fourniture (10) pour fournir de l'air extérieur pressurisé dans ledit récipient fermé (6).

7. Mixeur électrique selon l'une quelconque des revendications précédentes, **caractérisé en ce que** ledit membre de fermeture (7) a une portion rigide (32) associée à ladite portion élastique (31), ledit moyen de fourniture, comprenant un conduit de fourniture (35) délimité par les surfaces associées opposées desdites portions élastiques et rigides en communication avec l'intérieur dudit récipient par un ou plusieurs passages effectués sur ladite portion élastique.

8. Mixeur électrique selon l'une quelconque des revendications précédentes, **caractérisé en ce que** ledit récipient (6) est supporté par un support creux (11) ayant une base inférieure (12) qui engage le moyen de déplacement (9) duquel il reçoit le mouvement, et une base supérieure (13) supportant ledit récipient.

9. Mixeur électrique selon l'une quelconque des revendications précédentes, **caractérisé en ce que** ledit récipient (6) est logé dans un récipient porteur (36) de forme correspondante et dont la base inférieure (37) est connectée de façon amovible à ladite base supérieure (13) dudit support creux (11).

10. Mixeur électrique selon l'une quelconque des précédentes revendications, **caractérisé en ce qu'**il a un moyen pour empêcher la rotation relative entre ledit récipient et ledit récipient porteur comprenant des éléments de forme correspondante qui engagent les uns avec les autres.

11. Mixeur électrique selon l'une quelconque des revendications précédentes, **caractérisé en ce que** ledit moyen de déplacement (9) comprend une vis sans fin rotative (17), qui se visse dans un moyeu taraudé (18) dans ladite base inférieure (12) dudit support creux (11) et un membre d'interception (19) capable d'immobiliser la rotation dudit support creux au cours de la rotation de ladite vis sans fin.

12. Mixeur électrique selon l'une quelconque des revendications précédentes, **caractérisé en ce qu'**il comprend une unité formant tour ayant au moins une plaque transversale (4) sur laquelle le moteur (26) entraînant ledit outil et ledit arbre de rotation (25) dudit outil sont suspendus.

13. Mixeur électrique selon l'une quelconque des revendications précédentes, **caractérisé en ce que** ladite plaque transversale (4) supporte un mécanisme (27) sur le côté opposé audit moteur et audit arbre de rotation dudit outil pour transmettre le mouvement (27) dudit moteur audit arbre de rotation dudit outil.

14. Mixeur électrique selon l'une quelconque des précédentes revendications, **caractérisé en ce qu'**il a un moyen électromécanique (28) tout en immobilisant la rotation dudit outil.

15. Mixeur électrique selon l'une quelconque des revendications précédentes, **caractérisé en ce que** ledit moyen pour immobiliser la rotation dudit outil comprend un mécanisme à levier (39) supporté par ladite plaque transversale (4) opposé audit moteur et audit arbre de rotation dudit outil, et opérant directement sur la poulie (29) pour transmettre un mouvement audit arbre de rotation dudit outil.

16. Mixeur électrique selon l'une quelconque des revendications précédentes, **caractérisé en ce qu'**il comprend un moyen pour détecter les points de démarrage et d'arrêt desdits premier et second mouvements dudit mouvement.

17. Mixeur électrique selon l'une quelconque des revendications précédentes, **caractérisé en ce que** ledit moyen de détection est connecté à une unité de contrôle et comprend un premier microcontacteur détectant le point de démarrage dudit premier mouvement, un second microcontacteur détectant le point d'arrêt dudit premier mouvement coïncidant avec le point de démarrage dudit second mouvement, et un troisième microcontacteur détectant le point d'arrêt dudit second mouvement.

18. Procédé pour modifier la consistance de la phase d'un produit de confiserie au moyen d'un mixeur électrique (1), ledit procédé comprenant au moins la réalisation d'un premier mouvement vers le haut d'un récipient (6) pour ledit produit par rapport à un membre (7) fermant ledit récipient d'une position initiale dans laquelle ledit récipient est ouvert à une position finale dans laquelle ledit récipient est fermé hermétiquement et atteint ladite fin de ladite position fermée dudit récipient activant la rotation d'un outil (8) pour travailler ledit produit à l'intérieur dudit récipient fermé, la fourniture d'air pressurisé dans le dit récipient fermé pour émulsionner ledit produit, et la réalisation d'un second mouvement dudit récipient fermé par rapport audit outil pour augmenter la profondeur de pénétration dudit outil dans ledit récipient.

19. Procédé selon l'une quelconque des revendications précédentes, **caractérisé en ce qu'**il comprend l'exécution, après ledit second mouvement, d'un premier mouvement de retour opposé audit second mouvement pour diminuer la profondeur de pénétration dudit outil dans ledit récipient, à la fin dudit premier mouvement de retour la désactivation à la fois de la rotation dudit outil et de la fourniture de l'air pressurisé dans ledit récipient, et la réalisation d'un second mouvement de retour opposé audit premier mouvement vers l'extérieur pour ouvrir ledit récipient.

20. Procédé selon la revendication précédente, **caractérisé en ce que** lesdits premier et second mouvements vers l'extérieur et de retour sont effectués l'un après l'autre sans interruption.

21. Procédé selon la revendication précédente, **caractérisé en ce que** ledit second mouvement vers l'extérieur est effectué à une vitesse qui est inférieure ou égale à celle du premier mouvement vers l'extérieur.

22. Procédé selon la revendication précédente, **caractérisé en ce que** ledit premier mouvement de retour est effectué à une vitesse qui est inférieure ou égale à celui dudit second mouvement de retour.

23. Procédé selon l'une quelconque des revendications précédentes, **caractérisé en ce que** l'arbre de rotation dudit outil est immobilisé mécaniquement pour l'enlèvement dudit outil par le biais d'un accessoire de forme correspondante audit outil qui s'engage avec lui pour l'enlever par dévissage.
